# EUROPÄISCHE PATENTSCHRIFT

(11) **EP 1 712 875 B1**
(45) Veröffentlichungstag und Bekanntmachung des Hinweises auf die Patenterteilung: **14.01.2009**
(21) Anmeldenummer: 06005582.9
(22) Anmeldetag: 18.03.2006
(51) Int. Cl.: G01B 21/04

(54) **Verfahren und Vorrichtung zum Vermessen von Werkstücken mit einem Messtaster an einer Werkzeugmaschine**
Method and device for measuring workpieces with a measuring probe on a machine tool
Dispositif et procédé destinés à la mesure de pièces usinées au moyen d'un palpeur sur une machine-outil

(30) Priorität: 15.04.2005 DE 102005017708
(43) Veröffentlichungstag der Anmeldung: 18.10.2006
(73) Patentinhaber: m & h inprocess messtechnik GmbH, 88289 Waldburg (DE)
(72) Erfinder: Madlener, Wolfgang, 88212 Ravensburg (DE); Veil, Wilfried, 88211 Ravensburg (DE)
(74) Vertreter: Dobler, Markus

(56) Entgegenhaltungen:
- EP-A- 0 317 967
- EP-A- 0 759 534
- WO-A-03/002938
- WO-A-20/05028996

## Beschreibung

Die Erfindung betrifft ein Verfahren und eine Vorrichtung zum Vermessen von Werkstücken mit einem Messtaster an einer Werkzeugmaschine mit linearen Bewegungsachsen und wenigstens einer Schwenkachse. Immer häufiger kommen Werkzeugmaschinen zum Einsatz, die neben drei linearen Achsen zwei weitere Schwenkachsen besitzen und auch als Fünfachsenmaschine bezeichnet werden. Die Schwenkachsen können sich auf eine Schwenkmöglichkeit des Werkstücks und/oder des Werkzeugs beziehen. Die Schwenkachsen weisen allerdings im Vergleich zu den linearen Achsen eine geringere Genauigkeit auf. Das zeigt sich dadurch, dass zum Beispiel nach dem Einschwenken der entsprechenden Schwenkachsen die tatsächliche Position eines Werkstücks, eines Werkzeugs oder eines Messtasters nicht der theoretisch errechneten Position entspricht. Ursachen hierfür sind zum einen Winkelfehler der Schwenkachsen sowie Ungenauigkeit in der Position des Schwenkachsenzentrums. Verstärkt werden diese Ungenauigkeiten wenn die Maschine erhöhten Temperaturschwankungen unterliegt.

Aus der WO 2005/028996 A1 ist ein Verfahren zur Fehlerkompensation an Koordinatenmessmaschinen bekannt. Die WO 03/002938 A1 beschreibt ein Verfahren zum Betrieb einer Koordinatenmessmaschine mit einem Dreh-Schwenk-Gelenk.

### Aufgabe und Vorteile der Erfindung

Der Erfindung liegt die Aufgabe zugrunde, eine höhere Genauigkeit bei der Messung von Werkstücken in Werkzeugmaschinen mit wenigstens einer Schwenkachse zu erreichen.

Diese Aufgabe wird durch die Merkmale des Anspruchs 1 sowie 5 gelöst.

In den abhängigen Ansprüchen sind vorteilhafte Weiterbildungen der Erfindung beschrieben.

Die Erfindung geht zunächst von einem Verfahren zum Vermessen von Werkstücken mit einem Messtaster in einer Werkzeugmaschine aus, die lineare Bewegungsachsen und wenigstens eine.Schwenkachse umfasst.

Der Kern der Erfindung liegt darin, dass die Abweichung einer tatsächlich bestimmten Position eines Kalibrierkörpers, zum Beispiel einer Kalibrierkugel bei einer Schwenkposition, beispielsweise des Kalibrierkörpers und/oder des Messtasters zu einer theoretischen Position, die sich für den Kalibrierkörper ohne einen Schwenkfehler idealer Weise ergeben müsste, herangezogen wird, um einen Korrekturwert zu bestimmen, mit dessen Hilfe ein tatsächlicher Messwert zur Berechung einer Koordinate eines Messpunktes an einem Messobjekt bzw. eine theoretische Koordinate eines Messpunktes, die am Messobjekt angefahren werden soll, korrigiert wird, wenn am Messobjekt eine Messung in einer entsprechenden Schwenkposition vorgenommen wird.

Grundsätzlich kann auf diese Weise der Schwenkfehler des Messobjekts, aber auch ein Schwenkfehler des Messtasters korrigiert werden.

Dem Korrekturbemühen liegt die Erkenntnis zugrunde, dass beim Messen von Werkstücken auf einer Werkzeugmaschine zum Beispiel bei der Bewegung eines Messtasters von einer vordefinierten Startposition in die Richtung einer Endposition durch Verschwenken des Messtasters die Endposition aufgrund eines Schwenkfehlers tatsächlich nicht erreicht wird. Durch die erfindungsgemäße Vorgehensweise wird der Schwenkfehler erfasst und dann reduziert, im Idealfall kompensiert.

In der einfachsten Variante wird die am Kalibrierkörper ermittelte Abweichung unmittelbar von einem Messwert am Messobjekt zum Beispiel einem Werkstück subtrahiert oder addiert, je nachdem welches Vorzeichen die Abweichung aufweist. Soll ein Messpunkt am Messobjekt angefahren werden, wird die theoretische Koordinate um die am Kalibrierkörper ermittelte Abweichung korrigiert.

In einer bevorzugten Ausgestaltung der Erfindung wird die Position des Kalibrierkörpers in einer ungeschwenkten Ausgangslage bestimmt. Von dieser Position ausgehend wird dann die theoretische Position des Kalibrierkörpers, die dieser idealer Weise einnehmen müsste, ermittelt. Dabei ist es vorteilhaft, wenn als Kalibrierkörper eine Kugel eingesetzt wird, bei welcher die Bezugskoordinate das Kugelzentrum ist.

Die Messgenauigkeit wird weiter verbessert, wenn erst nach einer Klemmung der Schwenkachsen ein Korrekturwert bestimmt und die gewünschte Messung vorgenommen wird. Hierdurch wird dem Problem Rechnung getragen, dass die Schwenkbewegungen, der wenigstens einen Schwenkachse nicht nur ungenau, sondern auch nicht wiederholbar sind.

In der Praxis kann eine solche Vorgehensweise auf unterschiedliche Fälle angewandt werden:
a) Beispielsweise ist das Werkstück in zwei Achsen verschwenkbar, wobei eine Messtasteraufnahme eine X-Y-Z-Verfahrbarkeit besitzt. Bevor eine Messung durchgeführt wird, werden die Schwenkachsen am Werkstück geklemmt. Dann erfolgt die Ermittlung eines Korrekturwertes an einem Kalibrierkörper, der sich mit dem Werkstück mitbewegt hat, wonach die eigentliche Messung am Werkstück vorgenommen wird.
b) Schwenkbewegungen werden nur vom Messtaster vorgenommen. Vor dem Messen werden die Schwenkachsen geklemmt. Über eine X-Y-Z-Verfahrbarkeit führt der Messtaster die Messungen aus. Die Messungen werden um einen Korrekturwert korrigiert, der nach Klemmung der Schwenkachsen am Kalibrierkörper ermittelt wurde.
c) Bei dieser Variante kann sowohl das Werkstück als auch der Messtaster um eine Schwenkachse verschwenkt werden. Vor einer Messung werden die Schwenkachsen geklemmt. Mit geklemmter Schwenkachse wird ein Korrekturwert an einem Kalibrierkörper bestimmt, der mit dem Werkstück mitbewegt wird.

Beim Messvorgang wird dann jeweils der ermittelte Korrekturwert in Ansatz gebracht.

Im Fall a) und c) muss der Kalibrierkörper in gleicher Weise wie das Messobjekt bewegt werden, um die gewünschte Fehlerreduzierung bzw. Kompensation zu erhalten.

Im Fall b), bei welcher sich das Werkstück nur in X-, Y- oder Z-Richtung bewegt, kann der Kalibrierkörper auch ortsfest sein.

In einer besonders bevorzugten Ausgestaltung der Erfindung wird das Messobjekt in gleicher Weise wie der Kalibrierkörper bewegt, insbesondere geschwenkt. Um einen Korrekturwert zu erhalten, kann dann vor oder nach der eigentlichen Messung an der Messstelle am Kalibrierkörper gemessen werden, wobei der daraus ermittelte Korrekturwert bei der Messung in Ansatz gebracht wird.

Bei einer Werkzeugmaschine mit linearen Bewegungsachsen und wenigstens einer Schwenkachse für zum Beispiel-Werkzeug und/oder Werkstück mit einer Vorrichtung zum Vermessen von Werkstücken mit einem Messtaster liegt der Kerngedanke darin, dass eine Rechnereinheit dazu ausgelegt ist,
a) die Abweichung einer tatsächlich bestimmten Position eines Kalibrierkörpers bei einer Schwenkposition zu einer theoretischen Position, die sich für den Kalibrierkörper ohne einen Schwenkfehler idealer Weise ergeben müsste, heranzuziehen, um einen Korrekturwert zu berechnen und
b) mit dem Korrekturwert einen tatsächlichen Messwert
   b1) zur Berechnung einer Koordinate eines Messpunktes an einem Messobjekt
   b2) oder eine theoretische Koordinate eines Messpunktes, die am Messobjekt angefahren werden soll,
   zu korrigieren, wenn am Messobjekt eine Messung in einer entsprechenden Schwenkposition, zum Beispiel des Werkstücks oder des Messtasters vorgenommen wird.

Im Weiteren ist es besonders bevorzugt, wenn die Rechnereinheit als Bezugsposition die Position des Kalibrierkörpers in einer ungeschwenkten Ausgangslage heranzieht, um darauf alle Schwenkpositionen zu beziehen.

In einer bevorzugten Ausgestaltung der Erfindung ist der Kalibrierkörper starr mit einem Messobjekt, zum Beispiel einem Werkstück verbunden, das wenigstens um eine Schwenkachse schwenkbar gelagert ist. Damit macht der Kalibrierkörper alle Bewegungen mit, die auch das Werkstück ausführt. Nach einem Verschwenkvorgang lässt sich-bei feststehender wenigstens einer Schwenkachse der Schwenkfehler an der mitgeschwenkten Kalibrierkugel feststellen, um einen entsprechenden tatsächlichen Messwert am Werkstück zu korrigieren. Dadurch lassen sich insbesondere Ungenauigkeiten bei der Schwenkbewegung berücksichtigen, die bei Durchführung einer immer gleichen Schwenkbewegung zur Erreichung eines vordefinierten Punktes in unterschiedlicher Weise auftreten, also durch das einmalige Erfassen eines Schwenkfehlers bei einem Schwenken in die vorgegebene Position nur unzureichend berücksichtigt werden. Somit lassen sich große Wiederholgenauigkeiten erreichen.

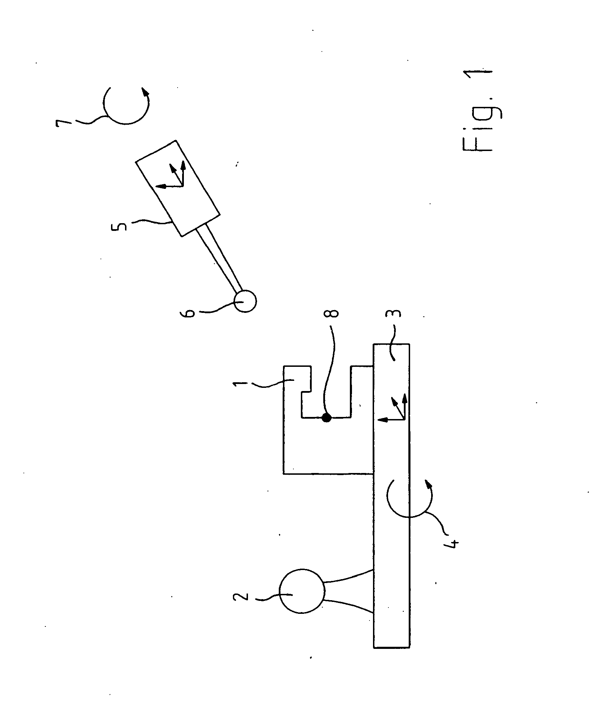

Ein Ausführungsbeispiel der Erfindung ist in der einzigen Figur dargestellt, die in stark schematisierter Ansicht einen Messaufbau zum Messen eines Werkstücks zeigt.

In der Figur ist ein Werkstück 1 und ein Kalibrierkörper 2 dargestellt, die an einer Aufnahme 3 angeordnet sind, die sich in X-, Y- und Z-Richtung verfahren als auch um eine Achse verschwenken lässt (die Schwenkachse wird durch den Pfeil 4 symbolisiert).

Außerdem dargestellt ist ein Messtaster 5 mit Messkugel 6. Der Messtaster 5 lässt sich ebenfalls in den Koordinatenrichtungen X, Y und Z verfahren als auch um eine Schwenkachse schwenken, die durch einen Pfeil 7 symbolisiert ist.

Eine Messung am Werkstück 1 kann folgendermaßen ablaufen: Um eine gewünschte Messstelle 8 am Werkstück 1 zu erreichen wird zum Beispiel der Messtaster 5 als auch die Aufnahme 3 in eine Schwenkposition gebracht, so dass die Messkugel 6 am Messtaster 5 die Messstelle 8 erreichen kann. Anschließend werden die Schwenkachsen geklemmt.

Mit Hilfe des Kalibrierkörpers 2 wird nun der Fehler durch die Schwenkvorgänge ermittelt. Hierzu wird die tatsächliche Position der Kalibrierkugel 2 mit einer theoretischen Position verglichen, die die Kalibrierkugel ohne Schwenkfehler der Schwenkachsen einnehmen müsste.

Bei diesem Vorgang wird sowohl der Schwenkfehler der Aufnahme 3 als auch der Schwenkfehler des Messtasters 5 mit berücksichtigt.

Beim Messen an der Messstelle 8 wird der ermittelte gemeinsame Schwenkfehler dann bei dem ermittelten Messwert einer tatsächlichen Koordinate in Ansatz gebracht oder eine theoretische Koordinate um den Schwenkfehler korrigiert, wenn es darum geht, mit dem Messtaster 5 eine gewünschte Messstelle 8 anzufahren.

Mit dieser Vorgehensweise werden nicht nur Schwenkfehler kompensierbar bzw. weitestgehend kompensierbar, sondern es lassen sich auch Wiederholungenauigkeiten ausschließen, da ein Schwenkfehler erst dann ermittelt wird, wenn die Schwenkachsen 4 und 7 geklemmt sind.

## Patentansprüche

1. Verfahren zum Vermessen von Werkstücken (1) mit einem Messtaster (5) in einer Werkzeugmaschine mit linearen Bewegungsachsen und wenigstens einer Schwenkachse, **dadurch gekennzeichnet, dass** die Abweichung einer tatsächlich bestimmten Position eines Kalibrierkörpers (2) bei einer Schwenkposition zu einer theoretischen Position, die sich für den Kalibrierkörper (2) ohne einen Schwenkfehler idealer Weise ergeben müsste, herangezogen wird, um einen Korrekturwert zu bestimmen, um welchen ein tatsächlicher Messwert zur Berechnung einer Koordinate eines Messpunktes an einem Messobjekt oder eine theoretische Koordinate eines Messpunktes, die am Messobjekt angefahren werden soll, korrigiert wird, wenn am Messobjekt eine Messung in einer entsprechenden Schwenkposition vorgenommen wird.

2. Verfahren nach Anspruch 1, **dadurch gekennzeichnet, dass** die Position des Kalibrierkörpers in einer ungeschwenkten Ausgangslage bestimmt wird und dass daraus die theoretische Position, die der Kalibrierkörper nach einer Schwenkbewegung einnehmen müsste, ermittelt wird.

3. Verfahren nach einem der vorhergehenden Ansprüche, **dadurch gekennzeichnet, dass** nach einer Klemmung der Schwenkachsen, der Korrekturwert bestimmt und die Messung vorgenommen wird.

4. Verfahren nach einem der vorhergehenden Ansprüche, **dadurch gekennzeichnet, dass** der Kalibrierkörper mit dem Messobjekt in gleicher Weise mitbewegt wird.

5. Werkzeugmaschine mit linearen Bewegungsachsen und wenigstens einer Schwenkachse, mit einer Vorrichtung zum Vermessen von Werkstücken (1) mit einem Messtaster (5), **dadurch gekennzeichnet, dass** eine Rechnereinheit dazu ausgelegt ist, die Abweichung einer tatsächlich bestimmten Position eines Kalibrierkörpers bei einer Schwenkposition zu einer theoretischen Position, die sich für den Kalibrierkörper ohne einen Schwenkfehler idealer Weise ergeben müsste, heranzuziehen, um einen Korrekturwert zu berechnen und mit dem Korrekturwert einen tatsächlichen Messwert zur Berechnung einer Koordinate eines Messpunktes an einem Messobjekt oder eine theoretische Koordinate eines Messpunktes, die am Messobjekt angefahren werden soll, zu korrigieren, wenn am Messobjekt eine Messung in einer entsprechenden Schwenkposition vorgenommen wird.

6. Vorrichtung nach Anspruch 5, **dadurch gekennzeichnet, dass** die Rechnereinheit ausgebildet ist, die Position des Kalibrierkörpers in einer ungeschwenkten Ausgangslage zu bestimmen und daraus eine theoretische Position, die der Kalibrierkörper nach einer Schwenkbewegung einnehmen müsste, zu ermitteln.

7. Vorrichtung nach Anspruch 5 oder 6, **dadurch gekennzeichnet, dass** der Kalibrierkörper starr mit einem Messobjekt verbunden ist.

## Claims

1. A method for measuring workpieces (1) with a measuring probe (5) in a machine tool with linear axes of motion and at least one pivot axis, **characterised in that** the deviation between the actual position of a calibrating body (2) in a pivoted position and a theoretical position, which the calibrating body (2) would ideally occupy without a pivoting error, is used to determine a correction value, by which an actual measured value for calculating a coordinate of a measuring point on a measurement object or a theoretical coordinate of a measuring point to be approached to the measurement object is corrected, when a measurement is carried out on the measurement object in a corresponding pivoted position.

2. Method according to claim 1, **characterised in that** the position of the calibrating body is determined in an unpivoted initial position and **in that** from the latter the theoretical position is determined that the calibrating body should adopt after a pivot movement.

3. Method according to one of the preceding claims, **characterised in that** after clamping the pivot axes the correction value is determined and the measurement is carried out.

4. Method according to one of the preceding claims, **characterised in that** the calibrating body is moved with the measurement object in the same manner.

5. Machine tool with linear axes of motion and at least one pivot axis with a device for measuring workpieces (1) with a measuring probe (5), **characterised in that** a computer unit is set up to use the deviation between the actual position of a calibrating body in a pivoted position and a theoretical position, which the calibrating body would ideally occupy without a pivoting error, to calculate a correction value and with the correction value to correct an actual measurement value for calculating a coordinate of a measuring point on a measurement object or a theoretical coordinate of a measuring point to be approached to the measurement object, when a measurement is carried out on the measurement object in a corresponding pivoted position.

6. Device according to claim 5, **characterised in that** the computer unit is designed to determine the position of the calibrating body in an unpivoted initial position and from the latter to determine a theoretical position that the calibrating body should adopt after a pivot movement.

7. Device according to claim 5 or 6, **characterised in that** the calibrating body is connected rigidly to a measurement object.

## Revendications

1. Procédé destiné à mesurer des pièces d'usinage (1) avec un palpeur de mesure (5) dans une machine-outil comportant des axes de déplacement linéaires et au moins un axe de pivotement,
**caractérisé en ce que** l'écart d'une position donnée effective d'un corps de calibrage (2) dans une position de pivotement par rapport à une position théorique qui, idéalement, sans erreur de pivotement, devrait être obtenue pour la corps de calibrage (2) est utilisé afin de définir une valeur de correction dont on corrige une valeur de mesure effective destinée au calcul d'une coordonnée d'un point de mesure sur un objet de mesure ou une coordonnée théorique d'un point de mesure qui doit être approchée sur l'objet de mesure quand une mesure est réalisée sur l'objet de mesure dans une position de pivotement correspondante.

2. Procédé selon la revendication 1,
**caractérisé en ce que** la position du corps de calibrage est déterminée dans une position de départ non pivotée et **en ce qu'**il en est déduit la position théorique que devrait prendre le corps de calibrage après un mouvement de pivotement.

3. Procédé selon l'une des revendications précédentes,
**caractérisé en ce que,** après un calage des axes de pivotement, la valeur de correction est déterminée et la mesure effectuée.

4. Procédé selon l'une des revendications précédentes,
**caractérisé en ce que** le corps de calibrage et l'objet de mesure sont déplacés en même temps et de la même façon.

5. Machine-outil comportant des axes de déplacement linéaires et au moins un axe de pivotement, un dispositif destiné à mesurer des pièces d'usinage (1) avec un palpeur de mesure (5),
**caractérisée en ce qu'**une unité de calculateur est conçue pour utiliser l'écart d'une position donnée effective d'un corps de calibrage dans une position de pivotement par rapport à une position théorique qui, idéalement, sans erreur de pivotement, devrait être obtenue pour le corps de calibrage, afin de calculer une valeur de correction et de corriger avec la valeur de correction une valeur de mesure effective destinée au calcul d'une coordonnée d'un point de mesure sur un objet de mesure ou une coordonnée théorique d'un point de mesure qui doit être approchée sur l'objet de mesure quand une mesure est réalisée sur l'objet de mesure dans une position de pivotement correspondante.

6. Dispositif selon la revendication 5,
**caractérisé en ce que** l'unité de calculateur est réalisée pour déterminer la position du corps de calibrage dans une position de départ non pivotée et pour en déduire une position théorique que devrait prendre le corps de calibrage après un mouvement de pivotement.

7. Dispositif selon la revendication 5 ou 6,
**caractérisé en ce que** le corps de calibrage est relié de façon fixe à un objet de mesure.
